# EUROPÄISCHE PATENTSCHRIFT

(11) **EP 2 310 705 B1**
(45) Veröffentlichungstag und Bekanntmachung des Hinweises auf die Patenterteilung: **20.03.2013**
(21) Anmeldenummer: 09776666.1
(22) Anmeldetag: 30.05.2009
(51) Int. Cl.: F16D 9/02, F16D 33/18

(54) **VERSCHLUSS MIT THERMISCHER SICHERUNGSFUNKTION FÜR EINE HYDRODYNAMISCHE MASCHINE**
CLOSURE WITH THERMAL SAFETY FUNCTION FOR A HYDRODYNAMIC MACHINE
BOUCHON AVEC FONCTION THERMIQUE DE SÛRETÉ POUR UNE MACHINE HYDRODYNAMIQUE

(30) Priorität: 08.07.2008 DE 102008031905
(43) Veröffentlichungstag der Anmeldung: 20.04.2011
(73) Patentinhaber: Voith Patent GmbH, 89522 Heidenheim (DE)
(72) Erfinder: HOFFELD, Harald, 74564 Crailsheim (DE)
(74) Vertreter: Schmidt, Sven Hendrik
(86) Internationale Anmeldenummer: PCT/EP2009/003895
(87) Internationale Veröffentlichungsnummer: WO 2010/003485

(56) Entgegenhaltungen:
- DE-A1- 3 002 804
- US-A- 3 377 957
- US-A- 5 791 367
- US-A1- 2004 159 349

## Beschreibung

Die Ereindung betrifft eine hydrodynamische Maschine, beispielsweise eine hydrodynamische Kupplung, einen hydrodynamischen Wandler oder eine hydrodynamische Bremse (Retarder), umfassend einen Verschluss mit thermischer Sicherungsfunktion. Daneben ist der Verschluss mit thermischer Sicherungsfunktion auch bei anderen hydraulischen Maschinen zur Leistungsübertragung verwendbar, beispielsweise bei einer sogenannten Viskokupplung.

Hydrodynamische oder hydraulische Maschinen der eingangs genannten Art weisen ein Gehäuse auf, welches ein Arbeitsmedium aufnimmt. Das Arbeitsmedium dient dazu, Antriebsleistung beziehungsweise Drehmoment von einem Primärrad auf ein Sekundärrad hydrodynamisch oder bei einer Viskokupplung durch Scherkräfte im Arbeitsmedium zu übertragen. Bei Kupplungen laufen sowohl Primärrad als auch Sekundärrad um. Bei einem hydrodynamischen Retarder kann das Sekundärrad als Stator ausgeführt sein oder entgegengesetzt zum Primärrad umlaufen.

Es sind bereits verschiedene Verschlüsse mit thermischer Sicherungsfunktion für hydrodynamische Maschinen bekannt. Hierzu wird besonders auf die folgenden Dokumente verwiesen:
DE 103 61 453 B3
DE 103 61 440 A1
EP 1 577 577 A2
US 5 398 794 A
US 3 399 352 A
US 3 436 916 A

Die drei erstgenannten Dokumente beschäftigen sich ausdrücklich mit der Reduzierung der Ansprechzeit des Verschlusses, um bei einem raschen Temperaturanstieg des Arbeitsmediums der hydrodynamischen Maschine schnell einen ausreichend großen Auslassquerschnitt zu öffnen, über welchen das Arbeitsmedium aus dem Arbeitsraum der hydrodynamischen Maschine ausströmen kann und somit eine Schädigung der hydrodynamischen Maschine durch Überhitzung vermeiden kann.

Die Dokumente DE 103 61 440 A1 und EP 1 577 577 A2 schlagen hierzuvor, eine Isolation zwischen den Verschlusskörper und das aufschmelzbare Schmelzelement einzubringen, um eine schnellere Aufheizung des Schmelzelementes zu bewirken. Das Dokument DE 103 61 453 B3, dessen Merkmale im Oberbegriff des vorliegenden Anspruches 1 zusammengefasst sind, schlägt vor, einen Verschlusskern oder Bolzen in einen Durchlass des Verschlusskörpers beziehungsweise eines Zwischenelementes, das in den Verschlusskörper eingesetzt ist, einzubringen und den Verschlusskern beziehungsweise den Bolzen mittels eines aufschmelzbaren Schmelzelementes abdichtend mit dem Verschlusskörper beziehungsweise dem Zwischenelement zu verbinden, so dass der Durchlass gegenüber einem Durchtritt des Arbeitsmediums abgedichtet ist. Der Bolzen weist dabei entweder die Form eines Vollzylinders oder die Form eines Hohlzylinders auf, dessen Stirnseite geschlossen ist und vollflächig vom Arbeitsmedium beaufschlagt wird. Um ein rasches Aufheizen des Bolzens (Verschlusskerns) zu erreichen, ragt dieser in Axialrichtung aus dem Verschlusskörper heraus, so dass er auch entlang seines äußeren Umfangs vom Arbeitsmedium umspült wird und damit eine innige wärmeübertragende Verbindung mit dem Arbeitsmedium herstellt.

Obwohl der in dem Dokument DE 103 61 453 B3 dargestellte Verschluss mit thermischer Sicherungsfunktion aufgrund seines speziellen Aufbaus schon ein äußerst rasches Ansprechen der thermischen Sicherungsfunktion ermöglicht, weist er den Nachteil einer verhältnismäßig großen axialen Länge auf. Aufgrund immer höherer Anforderungen an hydrodynamische Maschinen wäre es ferner wünschenswert, wenn die Ansprechzeit der thermischen Sicherungsfunktion nochmals verkürzt werden könnte, da dann höhere Temperaturen des Arbeitsmediums in der hydrodynamischen Maschine zulässig sind, weil ein entsprechender Temperaturüberschwinger vermieden wird.

Im Behälterbau sind Überdruckventile bekannt, welche beispielsweise ein Gas ablassen sollen, bevor es zu einer Explosion kommt. Hierzu beschreibt das Dokument US 5 791 367 A ein Überdruckventil, das einen Gastank mittels eines Verschlusskerns in einer Schraube verschließt. Der Verschlusskern kann eine Öffnung aufweisen, welche gegenüber der Umgebung hin geöffnet ist oder mit einem Material mit abweichender Wärmeleitfähigkeit gefüllt ist. Entsprechende Ventile mit einer durchgehenden Bohrung, die durch eine Berstscheibe abgedeckt ist, beschreiben die Dokumente US 4 744 382 A und US 6 866 507 B1. Weitere Verschlüsse sind in den Dokumenten US 3 927 791 A, US 47 076 A und DE 20 09 194 A beschrieben. Eine gattengsgemäße hydrodynamische Maschine mit einem Verschluß mit thermischer Sicherungsfunktion ist aus US 3,377,957 bzw. aus DE 3002804.

Der vorliegenden Erfindung liegt die Aufgabe zugrunde, einen Verschluss mit thermischer Sicherungsfunktion der eingangs genannten Art hinsichtlich einer günstigen Bauform und seiner Ansprechzeit weiter zu verbessern.

Die erfindungsgemäße Aufgabe wird durch einen Verschluss mit thermischer Sicherungsfunktion mit den Merkmalen von Anspruch 1 gelöst. In den abhängigen Ansprüchen sind vorteilhafte und besonders zweckmäßige Gestaltungen der Erfindung angegeben.

Der erfindungsgemäße Verschluss mit thermischer Sicherungsfunktion für eine hydrodynamische oder hydraulische Maschine, wie sie beispielsweise eingangs beschrieben worden sind, insbesondere für eine hydrodynamische Kupplung, ist derart gestaltet, dass er in ein Gehäuse der hydrodynamischen beziehungsweise hydraulischen Maschine eingesetzt werden kann, und zwar derart, dass er in einer strömungsleitenden Verbindung mit dem im Gehäuse aufgenommenen Arbeitsmedium steht beziehungsweise an seinem dem Innenraum des Gehäuses zugewandten Ende - vorliegend als vorderes oder inneres Ende bezeichnet - vom Arbeitsmedium umspült wird.

Der Verschluss weist einen Verschlusskörper auf, der an dem oder in dem Gehäuse montiert werden kann. Beispielsweise kann der Verschlusskörper in das Gehäuse eingeschraubt oder anders eingesetzt sein.

Der Verschlusskörper weist einen Durchlass auf, in welchen ein Verschlusskern eingebracht ist, welcher mittels eines bei einer vorgegebenen Temperatur aufschmelzbaren Schmelzelementes derart unmittelbar mit dem Verschlusskörper oder mit einem im Verschlusskörper abdichtend eingebrachten Zwischenelement verbunden ist, dass der Durchlass gegenüber einem Durchtritt des Arbeitsmediums beziehungsweise einem Austritt des Arbeitsmediums aus dem Gehäuse abgedichtet ist. Der Verschlusskern kann somit mittels des aufschmelzbaren Schmelzelementes, insbesondere in Form eines Schmelzlots, unmittelbar in den Verschlusskörper eingelötet oder anderweitig insbesondere stoffschlüssig verbunden sein, oder beispielsweise in eine Hülse eingelötet oder anderweitig stoffschlüssig mit dieser verbunden sein, welche abgedichtet in den Verschlusskörper eingesetzt ist.

Erfindungsgemäß weist der Verschlusskern eine Blindbohrung, insbesondere mit einem kreisrunden Querschnitt, oder ein sonstiges an einem Ende geschlossenes Sackloch auf. Die Blindbohrung beziehungsweise das Sackloch weisen ein offenes Ende auf, das zu dem Arbeitsraum hin geöffnet ist, so dass das Arbeitsmedium in den Verschlusskern hineinströmen kann. Durch das Einströmen des Arbeitsmediums in den Verschlusskern wird eine besonders große Oberfläche zur Wärmeübertragung von dem Arbeitsmedium in den Verschlusskern geschaffen, insbesondere, wenn die Blindbohrung beziehungsweise das Sackloch nahezu über die gesamte axiale Länge des Verschlusskerns reicht, das heißt nur ein verhältnismäßig dünner Boden im hohlen Verschlusskern verbleibt. Alternativ oder zusätzlich kann die Wandstärke der Umfangswandung des hohlen Verschlusskernes dünn ausgeführt sein, um einen entsprechenden dünnwandigen Hohlkörper mit geringer Wärmekapazität zu bilden. Durch die schnelle Aufheizung des Verschlusskernes wird ein rasches Aufschmelzen des Schmelzelementes zwischen dem Verschlusskern und dem Zwischenelement beziehungsweise zwischen dem Verschlusskern und dem Verschlusskörper erreicht.

Besonders vorteilhaft besteht der Verschlusskern aus einem massiven, insbesondere gegossenen Werkstoff, in welchen die Blindbohrung beziehungsweise das Sackloch eingebracht ist. Bei dem Verschlusskern kann es sich somit um einen hinsichtlich seines Materials homogenen Körper handeln.

Der Verschlusskern kann beispielsweise eine sphärische Form auf seiner Außenseite aufweisen.

Günstig ist es, wenn der Verschlusskern einen solchen gegenüber dem Innendurchmesser des Durchlasses, in welchen er eingebracht ist, verminderten Außendurchmesser aufweist, dass nach dem Aufschmelzen des Schmelzelementes kein Verklemmen des Verschlusskerns im Durchlass möglich ist, wenn sich der Verschlusskern in Axialrichtung durch den Durchlass bewegt. Insbesondere ist der Außendurchmesser derart vermindert, dass sich auch bei einem Verkippen des Verschlusskerns innerhalb des Durchlasses kein verklemmter Zustand zwischen Verschlusskern und Verschlusskörper beziehungsweise zwischen Verschlusskern und Zwischenelement einstellt.

Der Verschlusskern weist auf seiner Außenseite vorteilhaft eine mit dem Schmelzelement gefüllte Einschnürung auf. Hierdurch ist es möglich, das Schmelzelement sicher stoffschlüssig mit dem Verschlusskern zu verbinden.

Das Schmelzelement kann insbesondere über seiner gesamten axialen Länge zwischen dem Verschlusskern und dem Verschlusskörper beziehungsweise zwischen dem Verschlusskern und dem Zwischenelement eingeschlossen sein. Bei einem solchen Ausführungsbeispiel weist das Schmelzelement dementsprechend eine Ringform, insbesondere Kreisringform mit einer durchgehenden Öffnung auf, in welche der Verschlusskern abdichtend eingesetzt ist.

Der Verschlusskörper kann einen Vorsprung oder eine Vertiefung aufweisen, die teilweise oder vollständig mit dem Schmelzelement gefüllt ist, um eine formschlüssige Verbindung zwischen Verschlusskörper und Schmelzelement zu erreichen. Bei Vorsehen eines Zwischenelementes ist es selbstverständlich möglich, das Zwischenelement mit einer entsprechend mit dem Schmelzelement gefüllten Vertiefung zu versehen.

Die genannte Vertiefung ist insbesondere in Form einer Umfangskerbe ausgeführt, welche insbesondere mit Abstand zu beiden axialen Enden des Durchlasses angeordnet ist.
Als Werkstoff für den Verschlusskern kommt insbesondere Kupfer in Betracht. Der Verschlusskörper kann beispielsweise aus CuZn39Pb3F43 ausgeführt sein, oder aus 11 SMN30+C. Andere Werkstoffe sind jedoch möglich.

Die Erfindung soll nachfolgend anhand eines Ausführungsbeispiels und der beigefügten Figur exemplarisch beschrieben werden.

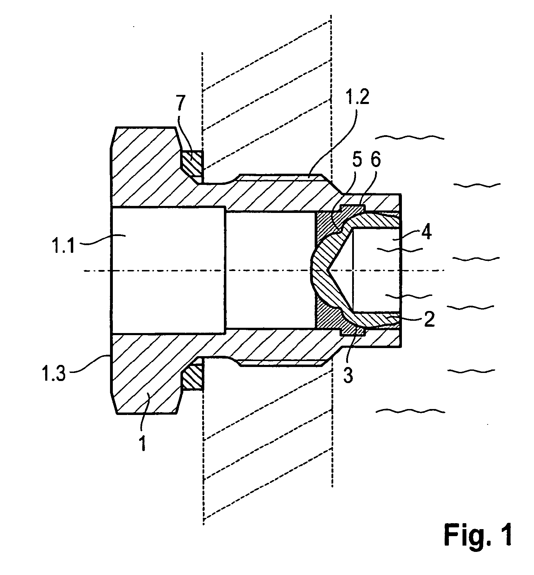

In der Figur 1 erkennt man einen erfindungsgemäßen Verschluss, der in das Gehäuse einer hydrodynamischen Maschine eingesetzt ist und an seinem axial vorderen Ende, das in den Innenraum des Gehäuses hineinragt, mit Arbeitsmedium beaufschlag wird. Das Gehäuse der hydrodynamischen Maschine ist nur in gestrichelten Linien angedeutet, das Arbeitsmedium durch Wellenlinien.

Der Verschluss weist einen Verschlusskörper 1 auf, der ein Gewinde 1.2 trägt, mittels welchem er in das Gehäuse eingeschraubt ist. Der Verschlusskörper 1 ist ferner mittels einer Dichtung 7 gegen das Gehäuse abgedichtet. Die Dichtung 7 ist eine Quetschdichtung, das heißt, sie weist vorliegend eine Umfangsnut auf, welche durch die axiale Stauchung im eingebauten Zustand, wie dargestellt, zusammengedrückt wird, so dass sich die beiden die Nut begrenzenden Stirnflächen, welche im entspannten Zustand der Quetschdichtung mit Abstand zueinander angeordnet sind, berühren.

Der Verschlusskörper 1 weist ferner einen Kopf 1.3 auf, der beispielsweise als Außensechskant ausgeführt sein kann, um den Verschlusskörper 1 in das Gehäuse einschrauben zu können. Selbstverständlich ist es möglich, andere Angriffsflächen für ein Schraubwerkzeug am Verschlusskörper 1 beziehungsweise dessen Kopf 1.3 auszuführen, beispielsweise für einen Innensechskantschlüssel oder dergleichen.

In den Verschlusskörper 1 ist ein Durchlass 1.1 eingebracht, der durch den gesamten Verschlusskörper 1 in Axialrichtung hindurchreicht und vorliegend gestuft ausgeführt ist, das heißt verschiedene sich aneinander anschließende axiale Abschnitte mit zueinander abweichenden Innendurchmessern aufweist. Selbstverständlich ist es möglich, den Durchlass 1.1 auch zylindrisch mit konstantem Durchmesser zu gestalten.

In den Durchlass 1.1 ist ein Verschlusskern 2 eingebracht. Vorliegend ist der Verschlusskern 2 derart im vorderen, in den Innenraum des Gehäuses hineinreichenden axialen Ende eingesetzt, dass er bündig mit der Stirnseite des Verschlusskörpers 1 abschließt. Der Verschlusskern 2 ist mittels eines Schmelzelementes 3 in dem Verschlusskörper 1 befestigt. Bei Ausführen des Schmelzelementes 3 als Schmelzlot ist der Verschlusskern 2 in den Verschlusskörper 1 eingelötet.

Obwohl dies nicht dargestellt ist, könnte der Verschlusskern 2 auch mittels des Schmelzelementes in einem Zwischenelement befestigt sein, das dann abgedichtet in den Verschlusskörper 1 eingesetzt ist.

Das Schmelzelement 3 schmilzt oberhalb einer vorgegebenen Temperatur, zum Beispiel oberhalb einer Temperatur von 60° oder 70° C und gibt dadurch die Verbindung zwischen dem Verschlusskörper 1 (oder einem Zwischenelement) und dem Verschlusskern 2 frei. Hierdurch kann sich der Verschlusskern 2 innerhalb des Durchlasses 1.1 bewegen beziehungsweise aus dem Verschlusskörper 1 heraustreten, so dass der Durchlass 1.1 für Arbeitsmedium freigegeben wird, das dann aus dem Arbeitsraum beziehungsweise aus dem Gehäuse ausströmen kann.

Um einen höheren Widerstand gegenüber einer Schubkraft zu ermöglichen, weist der Verschlusskörper 1 auf seiner Innenseite im Durchlass 1.1 eine Umfangskerbe 6 auf, welche eine Hinterschneidung mit dem Schmelzelement 3 bildet. Ferner weist der Verschlusskern 2 auf seinem äußeren Umfang, der im wesentlichen sphärisch beziehungsweise kugelförmig ist, eine Einschnürung 5 auf, die ebenfalls mit dem Schmelzelement 3 gefüllt ist. Durch diese Maßnahmen wird eine besonders innige Verbindung zwischen Verschlusskörper 1, Schmelzelement 3 und Verschlusskern 2 gebildet.

Erfindungsgemäß ist der Verschlusskern 2 mit einer Blindbohrung 4 versehen, so dass das Arbeitsmedium in den Verschlusskern 2 hineinströmen kann und eine verhältnismäßig große Oberfläche des Verschlusskernes 2, auf der Innenseite desselben, beaufschlagt. Hierdurch findet eine besonders rasche Erwärmung des Verschlusskernes 2 bei einer Übertemperatur des Arbeitsmediums statt, wobei die Wärme vom Verschlusskern 2 wiederum auf das Schmelzelement 3 übertragen wird und dieses aufschmilzt.

Bei der gezeigten Ausführungsform schließt das Schmelzelement 3 am axial inneren Ende beziehungsweise vorderen Ende des Verschlusskörpers 1 bündig mit dem Verschlusskörper 1 und insbesondere mit dem Verschlusskern 2 ab. Am axial entgegengesetzten Ende ragt der Verschlusskern 2 etwas über das Schmelzelement 3 in Axialrichtung hinaus.

## Patentansprüche

1. Hydrodynamische Maschine mit einem umlaufenden Primärrad und einem umlaufenden oder stationären Sekundärrad, wobei mittels eines Arbeitsmediums Antriebsleistung oder Drehmoment hydrodynamisch vom Primärrad auf das Sekundärrad übertragen wird, umfassend einen Verschluss mit thermischer Sicherungsfunktion eingesetzt in ein ein Arbeitsmedium aufnehmendes Gehäuse der hydrodynamischen Maschine, wobei
1.1 der Verschluss einen Verschlusskörper (1) zum Einschrauben, Einsetzen oder sonstigem Montieren an dem Gehäuse aufweist;
1.2 der Verschlusskörper (1) einen Durchlass (1.1) aufweist, in welchen ein Verschlusskern (2) eingebracht ist, welcher mittels eines bei einer vorgegebenen Temperatur aufschmelzbaren Schmelzelementes (3) derart unmittelbar mit dem Verschlusskörper (1) oder einem im Verschlusskörper (1) abdichtend eingebrachten Zwischenelement verbunden ist, dass der Durchlass (1.1) gegenüber einem Durchtritt des Arbeitsmediums abgedichtet ist;
**dadurch gekennzeichnet, dass**
1.3 der Verschlusskern (2) eine Blindbohrung (4) oder ein Sackloch aufweist, welche(s) zu dem Arbeitsraum hin geöffnet ist, so dass Arbeitsmedium in den Verschlusskern (2) hineinströmen kann.

2. Hydrodynamische Maschine gemäß Anspruch 1, **dadurch gekennzeichnet, dass** der Verschlusskern (2) aus einem massiven, insbesondere gegossenen Werkstoff besteht, in welchen die Blindbohrung (4) oder das Sackloch, insbesondere durch eine spanende Bearbeitung, eingebracht ist.

3. Hydrodynamische Maschine gemäß einem der Ansprüche 1 oder 2, **dadurch gekennzeichnet, dass** der Verschlusskern (2) eine sphärische Form auf seiner Außenseite aufweist.

4. Hydrodynamische Maschine gemäß einem der Ansprüche 1 bis 3, **dadurch gekennzeichnet, dass** der Verschlusskern (2) auf seiner Außenseite eine mit dem Schmelzelement (3) gefüllte Einschnürung (5) aufweist.

5. Hydrodynamische Maschine gemäß einem der Ansprüche 1 bis 4, **dadurch gekennzeichnet, dass** das Schmelzelement (3) eine Kreisringform mit einer durchgehenden Öffnung, in die der Verschlusskern (2) abdichtend eingesetzt ist, aufweist.

6. Hydrodynamische Maschine gemäß einem der Ansprüche 1 bis 5, **dadurch gekennzeichnet, dass** der Verschlusskörper (1) eine den Durchlass (1.1) erweiternde, mit dem Schmelzelement (3) gefüllte Vertiefung, insbesondere in Form einer Umfangskerbe (6) aufweist, welche insbesondere mit Abstand zu beiden axialen Enden des Durchlasses (1.1) angeordnet ist.

7. Hydrodynamische Maschine gemäß einem der Ansprüche 1 bis 6, **dadurch gekennzeichnet, dass** der Außendurchmesser des Verschlusskerns (2) derart vermindert gegenüber dem Innendurchmesser des Durchlasses (1.1) ausgeführt ist, dass ein Verklemmen des Verschlusskerns (2) im Durchlass (1.1) vermieden wird.

## Claims

1. A hydrodynamic machine, comprising a revolving primary wheel and a revolving or stationary secondary wheel, with drive power or torque being transmitted hydrodynamically from the primary wheel to the secondary wheel by means of a working medium, comprising a closure with thermal securing function which is inserted into a housing of the hydrodynamic machine which accommodates a working medium, with 1.1
the closure comprising a closure body (1) for screwing or inserting into the housing, or other mounting in the housing;
1.2 the closure body (1) comprises a passage (1.1) in which a closure core (2) is introduced which is connected directly to the closure body (1) or an intermediate element sealingly introduced into the closure body (1) by means of a melting element (3) which can be molten at a predetermined temperature in such a way that the passage (1.1) is sealed against a passage of the working medium; **characterized in that**
1.3 the closure core (2) comprises a blind hole (4) or pocket hole which is open towards the working chamber, so that working medium can flow into the closure core (2).

2. A hydrodynamic machine according to claim 1, **characterized in that** the closure core (2) consists of a massive, especially cast, material into which the blind hole (4) or the pocket hole is introduced, especially by means of machining.

3. A hydrodynamic machine according to one of the claims 1 or 2, **characterized in that** the closure core (2) has a spherical shape on its outside.

4. A hydrodynamic machine according to one of the claims 1 to 3, **characterized in that** the closure core (2) has a constriction (5) on its outside which is filled with the melting element (3).

5. A hydrodynamic machine according to one of the claims 1 to 4, **characterized in that** the melting element (3) has the shape of a circular ring with a continuous opening into which the closure core (2) is sealingly inserted.

6. A hydrodynamic machine according to one of the claims 1 to 5, **characterized in that** the closure body (1) comprises a depression, especially in form of a circumferential notch (6), which expands the passage (1.1), is filled with the melting element (3) and is especially arranged at a distance from the two axial ends of the passage (1.1).

7. A hydrodynamic machine according to one of the claims 1 to 6, **characterized in that** the outside diameter of the closure core (2) is arranged to be reduced in relation to the inside diameter of the passage (1.1) in such a way that jamming of the closure core (2) in the passage (1.1) is prevented.

## Revendications

1. Machine hydrodynamique avec une roue primaire rotative et une roue secondaire rotative ou stationnaire, dans laquelle une puissance motrice ou un couple de rotation est transmis au moyen d'un fluide de travail de la roue primaire à la roue secondaire, comprenant une fermeture avec une fonction de sécurité thermique utilisée dans un corps de la machine hydrodynamique recevant un fluide de travail, dans laquelle 1.1
la fermeture présente un bouchon (1) à visser, insérer ou monter d'une autre manière sur le corps ;
1.2 le bouchon (1) présente un passage (1.1) dans lequel peut être inséré un coeur de bouchon (2) qui est relié directement au bouchon (1) ou à un élément intermédiaire inséré de façon étanche dans le bouchon (1) au moyen d'un élément fusible (3) pouvant fondre à une température prédéterminée, de telle manière que le passage (1.1) soit rendue étanche au passage du fluide de travail ;
**caractérisée en ce que**
1.3 le coeur de bouchon (2) présente un alésage à fond plein (4) ou un trou borgne ouvert en direction de l'espace de travail, de telle sorte que du fluide de travail puisse pénétrer dans le coeur de bouchon (2).

2. Machine hydrodynamique selon la revendication 1, **caractérisée en ce que** le coeur de bouchon (2) se compose d'un matériau massif, en particulier coulé, dans lequel l'alésage à fond plein (4) ou le trou borgne est formé, en particulier par un procédé d'enlèvement de matière.

3. Machine hydrodynamique selon l'une des revendications 1 ou 2, **caractérisée en ce que** le coeur de bouchon (2) présente une forme sphérique sur sa face extérieure.

4. Machine hydrodynamique selon l'une des revendications 1 à 3, **caractérisée en ce que** le coeur de bouchon (2) présente sur sa face extérieure un resserrement (5) rempli avec l'élément fusible (3).

5. Machine hydrodynamique selon l'une des revendications 1 à 4, **caractérisée en ce que** l'élément fusible (3) présente une forme d'anneau circulaire avec une ouverture traversante dans laquelle le coeur de bouchon (2) est inséré de façon étanche.

6. Machine hydrodynamique selon l'une des revendications 1 à 5, **caractérisée en ce que** le bouchon (1) présente un renfoncement élargissant le passage (1.1) et rempli avec l'élément fusible (3), prenant notamment la forme d'une encoche circonférentielle (6), qui est disposé en particulier à distance par rapport aux deux extrémités axiales du passage (1.1).

7. Machine hydrodynamique selon l'une des revendications 1 à 6, **caractérisée en ce que** le diamètre extérieur du coeur de bouchon (2) est réduit par rapport au diamètre intérieur du passage (1.1) de façon à éviter que le coeur de bouchon (2) se coince dans le passage (1.1).
